# EUROPÄISCHE PATENTSCHRIFT

(11) **EP 2 492 069 B1**
(45) Veröffentlichungstag und Bekanntmachung des Hinweises auf die Patenterteilung: **29.07.2015**
(21) Anmeldenummer: 11155703.9
(22) Anmeldetag: 23.02.2011
(51) Int. Cl.: B26F 1/14, B29C 70/54

(54) **Verfahren zur Verstärkung eines Lochrandbereichs Werkstück mit einem Loch mit verstärktem Lochrandbereich Lochrandverstärkungsvorrichtung**
Method for reinforcing the edge of a hole, tool with a hole with reinforced edge and hole edge reinforcement device
Procédé de renforcement d'une zone de contour de trou, pièce usinée dotée d'un trou ayant une zone de contour renforcée, dispositif de renforcement de contour de trou

(43) Veröffentlichungstag der Anmeldung: 29.08.2012
(73) Patentinhaber: Röchling Automotive SE & Co. KG, 68165 Mannheim (DE)
(72) Erfinder: Kampke, Manfred, 85117, Eitensheim (DE)
(74) Vertreter: RLTG

(56) Entgegenhaltungen:
- EP-A1- 1 839 825
- DE-A1- 2 027 373
- US-A- 3 517 410
- US-A- 5 188 625

## Beschreibung

Die Erfindung betrifft ein Verfahren zur Verstärkung eines vorbestimmten Randbereichs eines Lochs (Lochrandverstärkungsverfahren) in einem Lochbereich eines Werkstücks, welcher thermoplastisch gebundene Fasern, vorzugsweise ein thermoplastisch gebundenes Fasergewirr umfasst, wobei das Fasermaterial des Lochbereichs radial außerhalb des vorbestimmten Randbereichs im fertigen Zustand einen Verdichtungsgrad von weniger als 90 %, vorzugsweise von weniger als 80 % aufweist.

Die Erfindung betrifft ferner ein Werkstück mit den Merkmalen des Oberbegriffs von Anspruch 8 mit einem Loch mit verstärktem Lochrandbereich, sowie eine Lochrandverstärkungsvorrichtung mit den Merkmalen des Oberbegriffs von Anspruch 13.

Aus der DE 37 15 409 A sind eine Lochbildungsvorrichtung und ein Lochbildurigsverfahren bekannt. Bei der bekannten Vorrichtung werden Kunststoff matten, welche durch Fasergelege oder Fasergewebe verstärkt sind, paketiert und zwischen zwei das Mattenpaket einfassenden Metallschienen angeordnet. Von einer der Metallschienen stehen in Paketierungsrichtung zur anderen, als "Gegenhaltschiene" bezeichneten Metallschiene spitze Dorne ab, welche die Matten aus faserverstärktem Kunststoff durchdringen sollen. In der Gegenhaltschiene, welche auch eine Werkstückanlagefläche im Sinne der vorliegenden Anmeldung aufweist, sind Durchgangslöcher für die Dorne vorgesehen.

Das so gebildete Paket wird zwischen Stempel und Tisch einer Pressvorrichtung verbracht, woraufhin durch den Pressstempel ein ausreichender Druck auf die die Dorne tragende Metallschiene ausgeübt wird, so dass die Dorne durch das Mattenpaket und durch die Durchgangslöcher in der Gegenhaltschiene hindurch in entsprechende Ausnehmungen im Pressentisch getrieben werden.

Dabei verdrängen die Dorne an ihren Durchtrittsorten die Fasern des Fasergeleges oder Fasergewebes in den einzelnen Matten. Da das in der DE 37 15 409 A beschriebene duroplastisch gebundene Faserverbundmaterial einen Verdichtungsgrad von 100% aufweist, also kompakt ist, kommt es bei der Verdrängung von Fasern aus dem gelochten Bereich zwar zu einer lokalen Verdichtung von Fasern um das Loch, jedoch nicht zu einer Verdichtung des Materials an sich im Sinne einer Abnahme einer bei dem Material der DE 37 15 409 A ohnehin nicht vorhandenen Porosität.

In diesem verpressten Zustand mit die Matten durchsetzenden Dornen wird das Mattenpaket in der Presse über einen Zeitraum von mehreren Stunden hinweg ausgehärtet, woraufhin die Dorne wieder entfernt werden.

Eine weitere, ähnliche Lochbildungsvorrichtung, allerdings ohne erkennbares Abstreifteil, ist im Stand der Technik (Vortrag auf dem CCeV Automotive Forum in Neckarsulm am 24.06.2010 von W. Hufenbach und F. Adam, beide vom Institut für Leichtbau und Kunststofftechnik der TU Dresden) zur Anwendung bei textilen Geweben aus im Wesentlichen ununterbrochen Fasern in thermoplastischer Matrix bekannt. Eine solche Vorrichtung ermöglicht es ebenfalls, ein Loch durch Verdrängung von Fasern in dem zu durchlochenden Abschnitt des Werkstücks zu bilden.

Die Dokumente US 3,517,410 A und DE 2027373 A1 beschreiben jeweils Verfahren zur Herstellung von Löchern in kompakten thermoplastischen Folien und zur Verstärkung vorbestimmter Randbereiche dieser Löcher, wobei jedes Loch so erzeugt wird, dass die Folie im Lochbereich zunächst von einem Dorn unter Verdrängung des Material des Folie durchdrungen wird. Das verdrängte thermoplastische Material wird von einem Abstreifteil entgegen einer Durchdringungsrichtung von dem Dorn abgestreift und unter Einwirkung von Wärme wird das thermoplastische Material um den Dorn herum, einschließlich des durch den Dorn verdrängten Materials, aufgeschmolzen und umgeformt, so dass es bei dem fertigen Werkstück einen Randbereich des Lochs bildet, in welchem die Materialdicke in Durchdringungsrichtung deutlich größer ist als in den Bereichen des Lochbereichs, die radial außerhalb des Randbereichs liegen. Weiterhin ist aus den beiden vorgenannten Dokumenten jeweils eine Lochrandverstärkungsvorrichtung mit den Merkmalen des Oberbegriffs von Anspruch 13 bekannt.

Dokument US 5,188,625 A beschreibt ein Werkstück mit den Merkmalen des Oberbegriffs von Anspruch 8, allerdings in Gestalt einer Damenbinde aus einem Fasermaterial mit thermoplastischen Fasern, bei welcher das Fasermaterial in einem Randbereich eines Lochs so verdichtet ist, dass es eine deutlich geringere Dicke in einer Durchgangsrichtung des Lochs aufweist als in den radial außerhalb des Randbereichs gelegenen Bereichen, wodurch eine textilartige Haptik erreicht werden soll.

Während der oben genannte Stand der Technik (mit Ausnahme der US 5,188,625 A) sich ausschließlich mit kompakten Materialien, also Materialien mit einem Verdichtungsgrad von 100 % beschäftigt, betrifft die vorliegende Erfindung grundsätzlich Verfahren, die an einem Material mit einem Verdichtungsgrad von weniger als 90 %, vorzugsweise von weniger als 80 %, ausgeführt werden. Ebenso betrifft die vorliegende Erfindung Werkstücke aus einem Material, welches zumindest radial außerhalb des eingangs bereits genannten vorbestimmten Randbereichs um ein im Material gebildetes Loch einen Verdichtungsgrad von weniger als 90 %, vorzugsweise von weniger als 80 %, aufweisen.

Mit "Verdichtungsgrad" ist in der vorliegenden Anmeldung ein Maß für das im Material vorhandene Luftvolumen oder allgemein Gasvolumen bezeichnet, so dass beispielsweise ein Material mit einem Verdichtungsgrad von 100 % keine Lufteinschlüsse aufweist, also kompakt ist bzw. nicht porös ist, während ein Material mit beispielsweise 60 Vol.-% Gasanteil einen Verdichtungsgrad von 40 % aufweist.

Bei den hier diskutierten thermoplastisch gebundenen porösen Faserverbundwerkstoffen besteht das grundsätzliche Problem, Löcher darin mit ausreichender Ausreißfestigkeit bereitzustellen, so dass Werkstücke aus derartigen Materialien Träger von gesondert ausgebildeten Befestigungseinrichtungen sein können, die in einem Loch des Werkstücks anzubringen sind.

Die Ausreißfestigkeit eines Lochrands ist grundsätzlich umso höher, je größer die Lochleibungsfläche ist und je höher die Festigkeit des den Lochrand bildenden Materials ist. Die wirksame Lochleibungsfläche ist proportional zum Produkt aus dem halben Umfang des Lochs und der Materialdicke des Lochrands. In einem Material, welches einen Verdichtungsgrad von weniger als 100% aufweist (poröses Material), stellt sich das Problem, dass jeder Versuch, die Ausreißfestigkeit eines in dem Material gebildeten Lochrands durch eine Erhöhung der Festigkeit des Lochrandmaterials, insbesondere durch Verdichten desselben, zu steigern, mit einer Verringerung einer Materialdicke eines Lochrandbereichs einhergeht. Eine solche Verringerung verkleinert jedoch die Lochleibungsfläche, was die Ausreißfestigkeit wiederum verringert. Umgekehrt gilt das Gleiche: Jeder Versuch, die Ausreißfestigkeit eines aus einem porösen Material gebildeten Lochrands durch eine Vergrößerung der Lochleibungsfläche aufgrund einer Erhöhung der Materialdicke zu steigern, geht aufgrund der zunehmenden Materialdicke mit einer Abnahme der Materialfestigkeit einher, so dass die Zunahme der Lochleibungsfläche durch eine Abnahme der Materialfestigkeit ebenso überkompensiert wird, wie im erstgenannten Versuch die Erhöhung der Materialfestigkeit durch Verdichtung durch eine Abnahme der Lochleibungsfläche überkompensiert wird.

Dieses Problem entsteht im Wesentlichen dadurch, dass Werkstücke aus thermoplastisch gebundenem Faserverbundmaterial überlicherweise aus einem gelofteten Mattenmaterial mit sehr geringem Verdichtungsgrad erzeugt werden. Durch die Herstellung der Werkstücke im Umformverfahren besteht also in der Regel keine Möglichkeit, Lochränder durch Materialzugabe zu verstärken, sondern vielmehr muss die gewünschte Ausreißfestigkeit mit dem in der Materialmatte als Rohmaterial vorhandenen Material erreicht werden.

Es ist daher eine Aufgabe der vorliegenden Erfindung, eine technische Lehre bereitzustellen, die es ermöglicht, die Ausreißfestigkeit eines beliebige gewünschte Abmaße aufweisenden Lochs in einem porösen thermoplastisch gebundenen Fasermaterial zu verbessern.

Die Aufgabe wird nach einem ersten Aspekt erfindungsgemäß durch ein Verfahren mit den Merkmalen von Anspruch 1 gelöst.

Durch das erfindungsgemäße Verfahren wird Werkstoffmaterial und insbesondere Fasern aus dem Bereich eines in einem Werkstück zu bildenden Lochs nach radial außen in einen Randbereich des Lochs verdrängt. Dadurch wird die Fasermenge im Randbereich erhöht. Anschließend wird der Randbereich des Lochs so verdichtet, dass das Fasermaterial des fertigen Werkstücks in dem Randbereich einen höheren Verdichtungsgrad aufweist als in radial außerhalb des Randbereichs gelegenen Bereichen des Lochbereichs. Dadurch wird die Ausreißfestigkeit des Rands des gebildeten Lochs bei im Wesentlichen unveränderter Lochleibungsfläche durch Verdichtung von aus dem Bereich des Lochs verdrängtem Werkstoffmaterial und ohne zusätzlichen Materialeinsatz in kostengünstiger Weise erhöht. Die abgestreiften Fasern bewirken eine Materialverstärkung des das gebildete Loch umgebenden Randbereichs, so dass eine zusätzliche Bewehrung des Lochrands zur Steigerung seiner Formtreue unter Belastung nicht nötig ist. Es fällt darüber hinaus im Wesentlichen kein Materialabfall an.

Zur Verdichtung des zur Bildung des Lochs verdrängten Fasermaterials im Randbereich des Lochs kann vorteilhaft ein zum Abstreifen von Fasern vom Dorn verwendetes Abstreifteil verwendet werden.

Beim Durchdringen des Lochbereichs mit dem oben beschriebenen Dorn werden üblicherweise vom Dorn Fasern in Durchdringungsrichtung mitgerissen, so dass eine Ringfläche an der Dornaußenwand, an welcher Fasern des durchdrungenen Materials anliegen, eine größere axiale Länge aufweist als die übrige Materialdicke des Werkstücks in Durchdringungsrichtung beträgt.

Da diese mitgerissenen Fasern ohnehin wieder zurückgeführt werden müssen, bietet es sich an, ein hierfür verwendetes Abstreifteil mit einer entgegen der Durchdringungsrichtung weisenden Pressfläche auszustatten und das Abstreifteil zur Verdichtung des den Dorn umgebenden Randbereichs zu verwenden.

Vorzugsweise wird das Verfahren unter Verwendung einer unten erläuterten erfindungsgemäßen Lochrandverstärkungsvorrichtung durchgeführt.

Als zu bildende Löcher oder Ausnehmungen werden im Rahmen dieser Patentanmeldung Durchgangslöcher bezeichnet. Sie können in einer zu der Durchdringungsrichtung orthogonalen Ebene grundsätzlich eine beliebige Querschnittsgestalt aufweisen. Bevorzugt sind jedoch symmetrische Querschnittsgestalten, insbesondere Querschnittsgestalten von Rund- oder Langlöchern.

Eine in der vorliegenden Anmeldung genannte Bewegung oder Beweglichkeit eines ersten Elements relativ zu einem zweiten Element schließt in der gesamten Patentanmeldung nicht aus, dass eines von dem ersten und dem zweiten Element relativ zu einem ortsfesten Gestell unbewegt bzw. unbeweglich sein kann. Wenn beispielsweise das erste Element in Bezug auf ein ortsfestes Gestell, etwa einen Vorrichtungsrahmen, unbewegt ist und das zweite Element in Bezug auf das ortsfeste Gestell bewegt bzw. beweglich ist, so ist das erste Element relativ zu dem zweiten Element bewegt bzw. beweglich.

Die Erfindung findet Anwendung bei porösen Werkstoffen, welche wenigstens in einem zu durchlochenden Abschnitt Fasern umfassen (Faserwerkstoffe). Faserwerkstoffe können regelmäßige Faserstrukturen, beispielsweise Fasergewebe, oder unregelmäßige Faserstrukturen, insbesondere in Form eines Fasergewirrs, etwa eines Faservlieses oder -filzes, umfassen. Grundsätzlich sind beliebige Faserstrukturen denkbar. Die verwendeten Fasern können im Wesentlichen beliebig lang oder kurz im Verhältnis zu den Werkstückmaßen, insbesondere zu den Lochabmessungen, sein. Die vorliegende Erfindung ist besonders relevant für Werkstoffe mit im Verhältnis zu den Lochabmessungen kurzen, insbesondere gewirrten, Fasern. Dabei soll jedoch nicht ausgeschlossen sein, dass ein erfindungsgemäßes Werkstück nicht Abschnitte aufweist, in denen das thermoplastisch gebundene Fasermaterial zum 100 % verdichtet ist. Dies betrifft dann jedoch nur einzelne lokale Bereiche, zu denen allerdings auch der oben genannte Randbereich gehören kann.

Ferner ist die Erfindung anwendbar auf Werkstoffe, die organische oder anorganische Fasern oder aber ein Gemisch aus organischen und anorganischen Fasern umfassen. Als anorganische Fasern kommen beispielsweise Fasern aus Glas, Kohlenstoff oder Keramik in Betracht, während organische Fasern zum Beispiel aus thermoplastischen Kunststoffen gebildet sein können. Gemäß einer besonders bevorzugten Ausführungsform sind Fasern Glasfasern.

Insbesondere ist die Erfindung bei Werkstücken aus LWRT-Material (Low Weight Reinforced Thermoplast) anwendbar. Dabei handelt es sich im Ausgangszustand um Faserverbundwerkstoffe mit vergleichsweise geringem Flächengewicht, die Bindefasern, etwa thermoplastische Kunststofffasern, aus beispielsweise einem Polyester oder einem Polyolefin, sowie Verstärkungsfasern, insbesondere Glasfasern, in Form eines Fasergewirrs umfassen. Die Verstärkungsfasern weisen einen höheren Schmelzpunkt als die Bindefasern auf. Bei der Herstellung von Formteilen aus LWRT wird der Faserverbund-Ausgangswerkstoff auf eine Temperatur zwischen den Schmelztemperaturen von Binde- und Verstärkungsfasern erwärmt und unter Druck in die gewünschte Gestalt verformt. Nach einem Abkühlen behält der Faserverbundwerkstoff, in dem das Material der Bindefasern nun eine Kunststoffmatrix bildet, seine Form bei. LWRT-Materialien, wie SeeberLite® und SeeberLite II, werden wegen ihrer geringen Massendichten und ihrer vorteilhaften Akustik- und Wärmeisolationseigenschaften vor allem im Fahrzeugbau zum Beispiel zur Herstellung von Unterbodenverkleidungen und Türinnenverkleidungen eingesetzt.

Gemäß einer vorteilhaften Ausführungsform des erfindungsgemäßen Verfahrens beginnt der Schritt des Abstreifens von Fasern vom Dorn frühestens dann, wenn der Dorn den Lochbereich soweit durchdrungen hat, dass Fasern des Werkstücks im Wesentlichen nur am Körperabschnitt des Dorns anliegen. Dadurch wird sichergestellt, dass an dem sich verjüngenden Abschnitt des Dorns im Wesentlichen keine Fasern anliegen, wenn es bei einer Relativbewegung von Abstreifteil und Dorn, insbesondere im Falle einer Aufnahme wenigstens des verjüngenden Abschnitts des Dorns in dem Abstreifteil, ansonsten zu einer Verschmutzung und insbesondere zu einer Beschädigung des Abstreifteils durch die Fasern kommen könnte. In einer bevorzugten Ausführungsform der Erfindung umfassen die Fasern Glasfasern, welche eine höhere Härte als Stahl aufweisen und daher ein aus einem Stahl oder einem Material mit vergleichbarer oder geringerer Härte gebildetes Abstreifteil abrasiv beschädigen und schließlich unbrauchbar machen können.

Vorzugsweise beginnt die Abstreifbewegung des Abstreifteils erst, nachdem die Relativbewegung zwischen Dorn und Werkstück zur Durchdringung des Lochbereichs beendet ist. Dadurch wird sichergestellt, dass das Abstreifteil nicht zu weit oder zu früh relativ auf den Dorn zu bewegt wird, so dass schon zu Beginn der Abstreifbewegung das von dem Dorn durchsetzte Loch den gewünschten Durchmesser aufweist und schon zu Beginn der Abstreifbewegung im Wesentlichen keine Fasern an dem sich verjüngenden Abschnitt des Dorns anliegen, die besonders einfach in einen zwischen Dorn und Abstreifteil gebildeten Spalt gelangen können.

Gemäß einer vorteilhaften Ausführungsform der Erfindung umfasst das erfindungsgemäße Verfahren einen weiteren Schritt eines Auswählens des Abstreifteils hinsichtlich der Größe von dessen Pressfläche in Abhängigkeit vom Faserverbundwerkstoff des Lochbereichs, der Größe des zu bildenden Lochs und der gewünschten Verstärkung des Randbereichs des zu bildenden Lochs. Dadurch wird es einem Anwender des Verfahrens ermöglicht, die zu erreichende Ausreißfestigkeit eines Lochs in Abhängigkeit von Eigenschaften des Werkstückmaterials, des Lochs und der gewünschten Verstärkung des Lochrandbereichs einzustellen.

Es ist vorteilhaft, wenn die beim Verdichten des Randbereichs auf das Abstreifteil ausgeübte Kraft größer ist als die beim Durchdringen des Lochbereichs auf den Dorn ausgeübte Kraft. Durch dieses Merkmal kann sichergestellt werden, dass im Wesentlichen das gesamte in den Randbereich des Lochs eingebrachte Fasernmaterial hinreichend verdichtet und der Randbereich. mit der gewünschten Festigkeit bereitgestellt werden kann. Denn wenn, wie es bevorzugt ist, der Abstreifschritt erst nach Ende des Durchdringungsschritts ausgeführt wird, kann das Werkstück beim Abstreifen kälter und der thermoplastische Binder somit stärker verfestigt sein als während des Durchdringens.

Vorzugsweise wird das Verfahren zur Lochrandverstärkung während einer pressenden Umformung des gesamten Werkstücks durchgeführt. Ein solches integriertes Lochverstärkungs- und Pressverfahren erspart dem Anwender einerseits den zeitlichen und materiellen Aufwand aufeinander folgende Arbeitsschritte. Andererseits erfordert das erfindungsgemäße Verfahren, dass das Werkstück in einem Zustand bereitgestellt wird, in dem der thermoplastische Binder erweicht ist, so dass der Lochbereich problemlos durchdrungen werden kann. Vor allem während des Umformens und insbesondere zu Beginn des Umformens ist sichergestellt, dass das Werkstück mit einem erweichten, noch nicht abgekühlten thermoplastischen Binder bereitgestellt ist. Das Verfahren wird aus diesem Grund noch bevorzugter zu Beginn der pressenden Umformung durchgeführt.

Das erfindungsgemäße Verfahren umfasst ein Verdrängen von Fasern aus dem Lochbereich. Dies schließt ein Trennen, insbesondere'ein Zerschneiden, von Fasern aus dem Lochbereich jedoch nicht aus. Dies kann bei schwer durchsetzbaren Fasermaterialien, etwa bei Polyestervliesen, notwendig sein. Gemäß einer weiteren Ausführungsform umfasst der Schritt des Durchdringens des Lochbereichs mit dem Dorn daher ein Durchtrennen von Fasern des Lochbereichs.

Der Randbereich des Lochbereichs weist im Allgemeinen vorzugsweise im Wesentlichen dieselbe Faserlängenverteilung auf wie ein außerhalb des Randbereichs liegender Bereich. Wenn der Schritt des Durchdringens des Lochbereichs ein Trennen von Fasern des Lochbereichs umfasst, weist der Randbereich des Lochbereichs zusätzlich kürzere Fasern auf.

Erfindungsgemäß erfolgt das Verdichten des Randbereichs derart, dass die Materialdicke des fertigen Randbereichs gleich wie die Materialdicke des radial außerhalb des Randbereichs gelegenen Materialbereichs ist.

Zur schnellen Verfestigung des zu verstärkenden Lochrands ist es vorteilhaft, wenn der Dorn eine niedrigere Temperatur aufweist als der zu durchlochende Abschnitt. Aus demselben Grund weist auch das Abstreifteil vorzugsweise eine niedrigere Temperatur auf als der zu durchlochende Abschnitt. Da Fasergewirre häufig mit aufgeschmolzenem Bindermaterial in Pressformen eingelegt werden, kann der Temperaturunterschied zwischen Werkstück und Dorn oder/und Abstreifteil mehrere zehn Kelvin betragen.

Die Aufgabe wird nach einem zweiten Aspekt erfindungsgemäß auch durch ein Werkstück mit den Merkmalen von Anspruch 8 gelöst.

Ein solches Werkstück erreicht alle in Verbindung mit anderen Aspekten der Erfindung genannten Vorteile der erfindungsgemäßen Lehre. Insbesondere stellt es ein Loch mit verbesserter Ausreißfestigkeit bereit. Vorzugsweise wird das Werkstück unter Verwendung einer unten erläuterten erfindungsgemäßen Lochrandverstärkungsvorrichtung hergestellt.

Der Materialbereich weist in dem erfindungsgemäßen Werkstück einen Verdichtungsgrad von weniger als 90 %, vorzugsweise von weniger als 80 %, auf. Der Verdichtungsgrad des Materialbereichs entspricht im Wesentlichen dem Verdichtungsgrad eines ungelochten, aber ansonsten identischen Vergleichswerkstücks. Dadurch wird gewährleistet, dass die Verstärkung des Randbereichs des Lochs durch Verdichtung eines räumlich begrenzten Bereichs des Werkstücks erreicht wird. Der Materialbereich muss hingegen nicht bearbeitet werden, so dass seine Werkstoffeigenschaften, etwa auch ästhetische Eigenschaften, erhalten bleiben und ein Bearbeitungsaufwand für das Werkstück reduziert wird.

Wie bereits in Bezug auf das erfindungsgemäße Verfahren dargestellt worden ist, weist der Randbereich des Lochbereichs vorzugsweise im Wesentlichen dieselbe Faserlängenverteilung auf wie der Materialbereich. Dies schließt jedoch nicht aus, dass in anderen Ausführungsformen des erfindungsgemäßen Werkstücks dieses einen . Randbereich des Lochbereichs aufweist, dessen Faserlängenverteilung von der Faserlängenverteilung des Materialbereichs verschieden ist und insbesondere, etwa wenn ein Durchdringen des Lochbereichs ein Trennen von Fasern des Lochbereichs umfasst, durch eine kleinere mittlere Faserlänge gekennzeichnet ist als die Faserlängenverteilung des Materialbereichs.

Gemäß einer weiteren Ausführungsform des erfindungsgemäßen Werkstücks weist das Faserverbundmaterial des Werkstücks mehrere unterschiedliche Materiallagen auf, von denen wenigstens eine ein thermoplastisch gebundenes Fasergewirr umfasst. Das Werkstück kann wenigstens in dem zu durchlochenden Abschnitt, vorzugsweise jedoch insgesamt, in Durchdringungsrichtung mehrlagig ausgebildet sein. Dies ermöglicht es, ein Werkstück mit einer gewünschten Kombination physikalischer, chemischer und anderer Eigenschaften durch geeignete Kombination von Lagen bereitzustellen. Die Lagen sind vorzugsweise mit hinsichtlich der verwendeten Werkstoffe oder/und der Faserabmessungen oder/und der Fasergeometrie oder/und dem Grad an Faserverschränkung unterschiedlichen Fasergewirren ausgebildet.

In Weiterbildung dieser Ausführungsform umfasst das Faserverbundmaterial des Werkstücks wenigstens eine Lage mit einem thermoplastisch gebundenen Fasergewirr und zusätzlich eine Decklage aus einem Vlies. Vliese werden an den hier diskutierten Materialien beispielsweise als mechanische Schutzschicht verwendet, etwa als aufpralldämpfende Schicht gegen Steinschlag und dergleichen.

Gemäß einer weiteren Ausführungsform des erfindungsgemäßen Werkstücks beträgt die radiale Ausdehnung des Randbereichs ausgehend von einer Mitte des Lochs in einer vorbestimmten radialen Richtung nicht weniger als das 1,5-fache, vorzugsweise nicht weniger als das 2-fache, und nicht mehr als das 15-fache, vorzugsweise nicht mehr als das 13,5-fache, des Lochradius in dieser Richtung.

Das aus einem Loch verdrängte Fasermaterial wird, wie oben bereits dargestellt wurde, in den Randbereich des Lochs eingebracht und gepresst. Je größer das Verhältnis des Betrags der Fläche des Randbereichs zu dem Betrag der Fläche des Lochs, desto weniger Fasermaterial pro Flächeneinheit wird in den Randbereich eingebracht und desto geringer fällt die Verstärkung aus. Je kleiner andererseits das Verhältnis des Betrags der Fläche des Randbereichs zu dem Betrag der Fläche des Lochs, desto kleiner ist die relative Fläche des Randbereichs, desto größer ist der Verstärkungseffekt. Daher sind Unter- bzw. Obergrenzen für das Verhältnis von radialer Ausdehnung des Randbereichs zu Lochradius vorteilhaft. Eine sinnvolle Untergrenze des Verhältnisses der radialen Abmessungen von Loch und Randbereich ist die Erzielung eines Randbereichs mit einem Verdichtungsgrad von 100 %. Jede darüber hinausreichende Verdichtung würde nur zu einem Austreiben von Binder, nicht jedoch zu einer weiteren Erhöhung der Materialfestigkeit führen. Ebenso ist die Obergrenze einer gewünschten Minimalerhöhung des Verdichtungsgrads des Randbereichs gegenüber dem Materialbereich zugeordnet, etwa einem gewünschten minimalen Unterschied von 5 % Verdichtungsgrad.

Schließlich wird die Aufgabe nach einem dritten Aspekt erfindungsgemäß auch durch eine Lochrandverstärkungsvorrichtung mit den Merkmalen von Anspruch 13 gelöst.

Eine solche Vorrichtung erreicht alle in Verbindung mit anderen Aspekten der Erfindung genannten Vorteile der Erfindung. Sie ermöglicht insbesondere eine Erhöhung der Ausreißfestigkeit von Rändern von in thermoplastisch gebundene Fasern aufweisenden Werkstücken gebildeten Löchern in einfacher und kostengünstiger Weise.

Vorzugsweise weist das Abstreifteil eine Innenausnehmung auf, die zur Aufnahme des Längsabschnitts des Dorns in der Endstellung ausgebildet ist. Eine solche Innenausnehmung ermöglicht es, durch Eindringen wenigstens eines Teils des Dorns an dem Dorn anliegende Fasern von dem Dorn abzustreifen. Besonders bevorzugt ist das Abstreifteil in Form einer Hülse gebildet.

Vorzugsweise ist die Lochrandverstärkungsvorrichtung mit mehreren gewünschtenfalls ablösbaren Dornen, gewünschtenfalls mit unterschiedlichen Abmaßen, oder/und mit mehreren gewünschtenfalls ablösbaren Abstreifteilen mit unterschiedlich bemessenen Innenausnehmungen und Pressflächen bereitgestellt.

Die Ausreißfestigkeit eines Loches hängt unter anderem von der Lochleibungsfläche des Loches, die proportional ist zum Produkt aus halbem Lochumfang und Lochtiefe bzw. Materialdicke im Bereich des Lochs, und von dem Verdichtungsgrad des Materials im Lochrandbereich ab. Da der Verdichtungsgrad des Fasermaterials im Randbereich des fertigen Werkstücks von den Durchmessern von Loch, Abstreifteil und gegebenenfalls Innenausnehmung des Abstreifteils ebenso abhängt wie von Eigenschaften, insbesondere der Materialdichte vor Verpressen, des Fasermaterials im Bereich des Lochs und im Randbereich, kann gemäß einer vorteilhaften Ausführungsform der erfindungsgemäßen Lochrandverstärkungsvorrichtung das Abstreifteil in Bezug auf Gestalt und Flächenbetrag seiner Pressfläche und gegebenenfalls seiner Innenausnehmung aus einer Mehrzahl von Abstreifteilen gemäß der gewünschten Ausreißfestigkeit des zu bildenden Lochrandbereichs ausgewählt werden. Die erfindungsgemäße Vorrichtung und das erfindungsgemäße Verfahren ermöglichen es insbesondere bei Werkstücken mit einem relativ geringen Verdichtungsgrad, durch Einbringen und Pressen von aus einem Loch verdrängtem Fasermaterial in den bzw. dem Lochrandbereich den Verdichtungsgrad in dem Lochrandbereich so zu erhöhen, dass eine für den verwendeten Werkstoff und die gewählten Lochabmessungen verbesserte Ausreißfestigkeit erzielt wird.

In diesem Zusammenhang hat es sich, wie bereits oben angesprochen wurde, als vorteilhaft erwiesen, wenn Pressfläche und Innenausnehmung des Abstreifteils, die dem Randbereich bzw. dem Bereich des Lochs entsprechen, Abmaße derart aufweisen, dass die radiale Ausdehnung des Randbereichs ausgehend von einer Mitte des Lochs in einer vorbestimmten radialen Richtung nicht weniger als das 1,5-fache, vorzugsweise nicht weniger als das 2-fache, und nicht mehr als das 15-fache, vorzugsweise nicht mehr als das 13,5-fache, des Lochradius in dieser Richtung beträgt. Insbesondere ist es bei eine Innenaufnehmung aufweisenden Abstreifteilen vorteilhaft, wenn die radiale Ausdehnung der Pressfläche des Abstreifteils ausgehend von einer Mitte der Innenausnehmung in einer vorbestimmten radialen Richtung nicht weniger als das 1,5-fache, vorzugsweise nicht weniger als das 2-fache, und nicht mehr als das 15-fache, vorzugsweise nicht mehr als das 13,5-fache, des Radius der Innenausnehmung in dieser Richtung beträgt.

Ferner kann die Lochrandverstärkungsvorrichtung eine Bearbeitungsform mit zwei Bearbeitungsformhälften umfassen, wobei der Dorn in einer ersten Bearbeitungsformhälfte, vorzugsweise relativ zu dieser beweglich, und das Abstreifteil in der zweiten Bearbeitungsformhälfte, vorzugsweise relativ zu dieser beweglich, angeordnet ist. Insbesondere kann die Bearbeitungsform eine Pressform mit zwei einen Pressspalt zwischen sich definierenden Pressformhälften sein. Eine solche integrierte Lochverstärkungs- und Pressvorrichtung ermöglicht es dem Anwender, den zeitlichen und materiellen Aufwand aufeinander folgender Arbeitsschritte zu reduzieren.

Vorteilhafterweise ist die Bearbeitungsform eine Pressform mit zwei einen Pressspalt zwischen sich definierenden Pressformhälften zur umformenden Formgebung. Vorteilhafterweise ist ferner ein dornseitiger Flächenabschnitt des Abstreifteils als Pressfläche zur Pressbearbeitung des Werkstücks ausgebildet. Eine derart weitergebildete Lochrandverstärkungsvorrichtung ermöglicht es beispielsweise, ein Loch in einem Werkstück, welches einen Faserwerkstoff mit thermoplastischem Binder im aufgeschmolzenen Zustand umfasst, mit den oben angegebenen Effekten und Vorteilen auszubilden und das Werkstück, insbesondere mit dem das Loch unmittelbar umgebenden Randbereich, dabei umformend zu pressen. Wenigstens eine Pressformhälfte kann gewünschtenfalls mehrere Pressformhälftenteile umfassen.

Der Dorn ist vorzugsweise relativ zu der ersten Bearbeitungsformhälfte beweglich, um ihn zum Beladen oder/und Schließen der Bearbeitungsform hinter eine Bearbeitungsfläche der Bearbeitungsformhälfte zurückziehen und zur Lochbildung über diese hinaus vorschieben zu können. Zusätzlich oder alternativ kann das Abstreifteil relativ zu der zweiten Bearbeitungsformhälfte beweglich sein. Vorzugsweise ist ferner die Werkstückanlagefläche eine Pressfläche der ersten, den Dorn aufnehmenden Pressformhälfte, da eine den Dorn aufnehmende Ausnehmung üblicherweise eine kleinere Öffnung aufweist als eine das einen Dornabschnitt aufnehmende Abstreifteil aufnehmende Ausnehmung, so dass die Pressfläche der den Dorn aufnehmenden Pressformhälfte in geringerem Maße durch für die Lochbildung notwendige Öffnungen gestört ist.

Eine erfindungsgemäße Lochrandverstärkungsvorrichtung kann mit den oben dargestellten Vorzügen vorteilhaft zur Bildung eines Lochs und zur Verstärkung eines den Lochrand aufweisenden Randbereichs des Lochs in einem wenigstens in einem zu durchlochenden Abschnitt, vorzugsweise vollständig, ein thermoplastisch gebundenes Fasergewirr umfassenden Werkstück verwendet werden. Das Werkstück kann wenigstens in dem zu durchlochenden Abschnitt, vorzugsweise vollständig, in Durchdringungsrichtung mehrlagig, vorzugsweise mit mehreren Lagen unterschiedlichen Fasergewirrs, ausgebildet sein.

Die vorliegende Erfindung wird nachfolgend anhand der beiliegenden Figuren an je zwei Ausführungsbeispielen einer Lochrandverstärkungsvorrichtung und eines Verfahrens zur Verstärkung eines vorbestimmten Randbereichs eines Lochs und einem Ausführungsbeispiel eines Werkstücks mit einem Loch mit verstärktem Lochrandbereich näher beschrieben werden. Es stellen dar:
- Fig. 1: eine erste Ausführungsform der erfindungsgemäßen Lochrandverstärkungsvorrichtung in einem Querschnitt nach dem Einlegen eines Werkstücks in die geöffnete Pressform in einer Ausgangsstellung von Dorn und Abstreifteil mit einer ersten, weggesteuerten Ausführungsform des Abstreifteils;
- Fig. 2: die erste Ausführungsform der erfindungsgemäßen Lochrandverstärkungsvorrichtung von Fig. 1 in einem Querschnitt nach dem Schließen der Pressform;
- Fig. 3: die erste Ausführungsform der erfindungsgemäßen Lochrandverstärkungsvorrichtung von Fig. 1 in einem Querschnitt nach dem Durchdringen des Lochbildungsbereichs des Werkstücks durch den Dorn in einer Zwischenstellung von Dorn und Abstreifteil;
- Fig. 4: die erste Ausführungsform der erfindungsgemäßen Lochrandverstärkungsvorrichtung in einem Querschnitt in einer weiteren Zwischenstellung von Dorn und Abstreifteil;
- Fig. 5: die erste Ausführungsform der erfindungsgemäßen Lochrandverstärkungsvorrichtung in einem Querschnitt in einer noch weiteren Zwischenstellung von Dorn und Abstreifteil;
- Fig. 6: die erste Ausführungsform der erfindungsgemäßen Lochrandverstärkungsvorrichtung in einem Querschnitt in einer Endstellung von Dorn und Abstreifteil bei einem Pressen des das Loch umgebenden Werkstückabschnitts (Lochrandbereich).
- Fig. 7: eine zweite Ausführungsform der erfindungsgemäßen Lochrandverstärkungsvorrichtung in einem Querschnitt in einer Zwischenstellung von Dorn und Abstreifteil in einer zweiten Ausführungsform des Abstreifteils;
- Fig. 8: die zweite Ausführungsform der erfindungsgemäßen Lochrandverstärkungsvorrichtung in einem Querschnitt in einer Endstellung von Dorn und Abstreifteil nach einem Pressen des das Loch umgebenden Werkstückabschnitts (Lochrandbereich).

Die Lochrandverstärkungsvorrichtung 2 umfasst gemäß einer ersten Ausführungsform der Erfindung einen Dorn 14 und ein separat von diesem ausgebildetes Abstreifteil 16, die beide aus einem hitzebeständigen Material mit einem Schmelzpunkt oberhalb des Schmelzpunkts eines in dem zu durchlochenden Werkstück 10 enthaltenen thermoplastischen Kunststoffes (Binder) gebildet sind. Dorn 14 und Abstreifteil 16 sind vorzugsweise jeweils einstückig ausgebildet. Die Lochrandverstärkungsvorrichtung 2 ist vorzugsweise integriert in eine Pressform 28, welche zwei einander über einen Pressspalt 35 hinweg gegenüberliegende Pressformhälften 30, 32 aufweist. Die Pressflächen P30 und P32 der Pressformhälften 30, 32 können als Negativ einer gewünschten Oberfläche des zu durchlochenden Werkstücks 10 geformt sein. Die Pressflächen P30 oder/und. P32 können zumindest abschnittsweise im Wesentlichen eben ausgebildet sein.

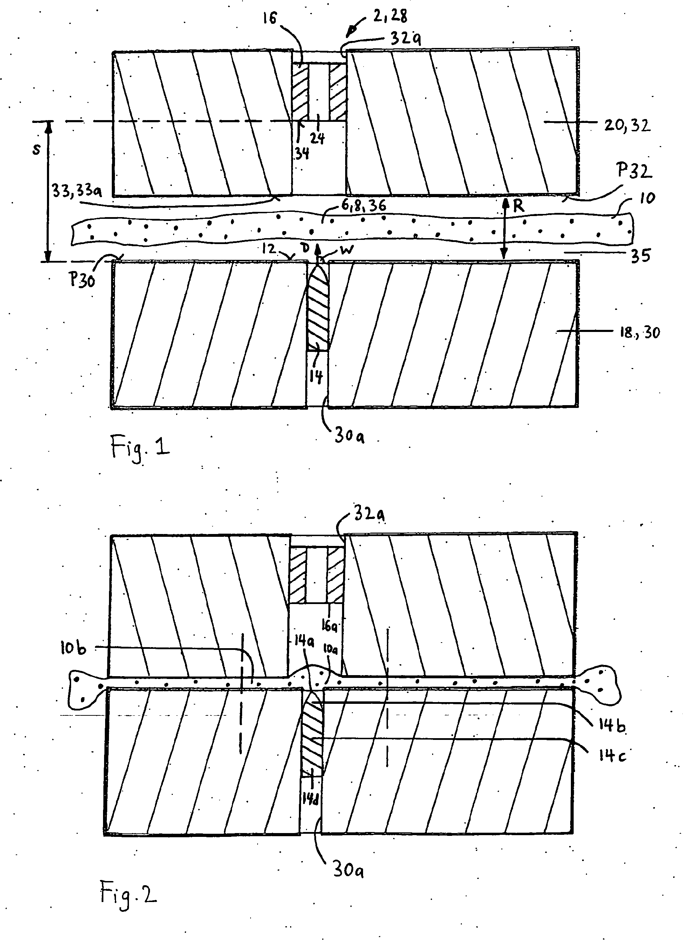

Der Dorn 14 ist in einer in Figur 1 dargestellten Ausgangsstellung, in welcher der Dorn 14 und das gemäß einer ersten Ausführungsform weggesteuert bereitgestellte Abstreifteil 16 mit einem Abstand s voneinander angeordnet sind, in einer ersten Pressformhälfte 30 der Pressformhälften 30, 32 vorzugsweise hinter die Pressfläche P30 zurückgezogen angeordnet. Das Abstreifteil 16 ist in der Ausgangsstellung in einer zweiten Pressformhälfte 32 angeordnet. Die Pressformhälften 30, 32 sind relativ zueinander in einer den Pressspalt 35 vergrößernden oder verkleinernden Bewegungsrichtung entsprechend dem Doppelpfeil R beweglich. Das Abstreifteil 16 und der Dorn 14 sind ebenfalls relativ zueinander beweglich. Vorzugsweise sind sowohl der Dorn 14 als auch das Abstreifteil 16 relativ zu der ersten oder/und der zweiten Pressformhälfte 30, 32 beweglich. Der Dorn 14 ist in einer Ausnehmung 30a der ersten Pressformhälfte 30 angeordnet und kann in dieser Ausnehmung 30a entlang einer zu der Bewegungsrichtung R vorzugsweise parallelen Durchdringungsrichtung D von der Ausgangsstellung in die Endstellung von Dorn 14 und Abstreifteil 16 geführt werden und von der Endstellung wieder zurück in die Ausgangsstellung geführt werden.

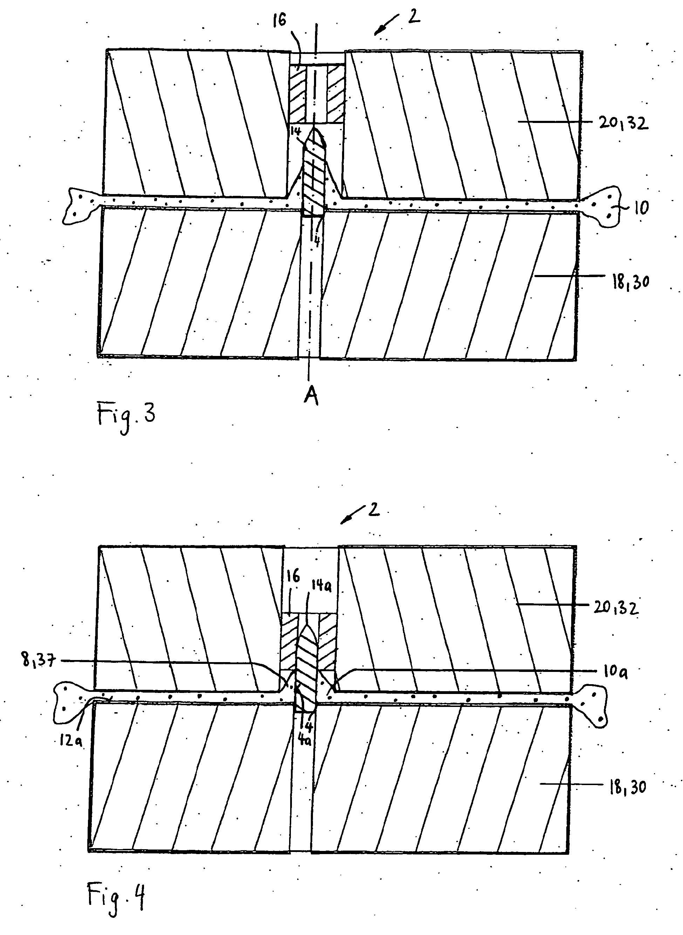

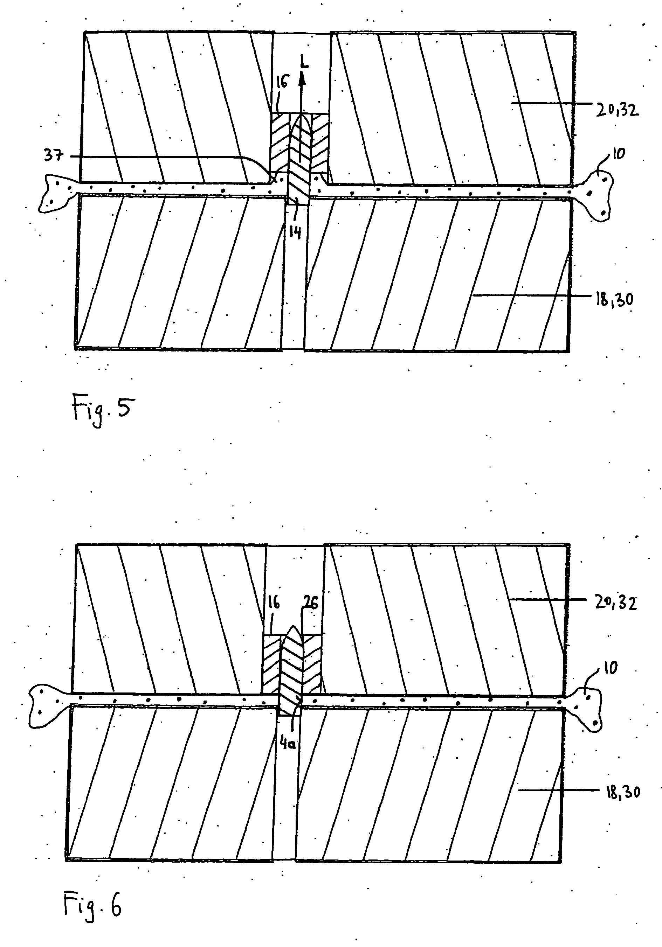

In den Figuren 1 und 2 ist jeweils die Ausgangsstellung von Dorn 14 und Abstreifteil 16 dargestellt, in den Figuren 3 bis 5 sind verschiedene Zwischenstellungen von Dorn 14 und Abstreifteil 16 und in Figur 6 ist eine Endstellung von Dorn 14 und Abstreifteil 16 dargestellt.

Der Dorn 14 weist in seiner zu der Durchdringungsrichtung D parallelen Längsrichtung L (Figur 5) vorzugsweise eine längliche, sich zu einem Längsende hin verjüngende und noch bevorzugter torpedo- oder projektilartige Form auf. Allgemein umfasst der Dorn 14 entlang seiner Längsrichtung L wenigstens einen sich zu einem in der Ausgangsstellung abstreifteilnäheren Endabschnitt 14a, vorzugsweise zu einer Spitze 14a, verjüngenden Längsabschnitt 14b. Ferner kann der Dorn 14 einen dem Längsabschnitt 14b benachbarten abstreifteilferneren Längsabschnitt 14c (Körperabschnitt) aufweisen, welcher entlang der Längsrichtung. L mit konstanter, noch bevorzugter kreisförmiger, Querschnittsgestalt ausgebildet ist. Der Querschnitt kann jedoch beispielsweise eine ovale Gestalt oder auch die Gestalt eines Drei-, Vier- oder Vielecks oder eine beliebige andere Gestalt aufweisen. Mit einem entsprechend gestalteten Dorn kann auch ein Langloch erzeugt werden.

Das Abstreifteil 16 ist in einer Ausnehmung 32a der zweiten Pressformhälfte 32 angeordnet und kann in dieser Ausnehmung 32a entlang der Durchdringungsrichtung D von der in den Figuren 1 und 2 dargestellten Ausgangsstellung in die in Figur 6 dargestellte Endstellung des Abstreifteils 16 führbar sein und aus dieser zurück in die Ausgangsstellung führbar sein. Es weist vorzugsweise eine längliche, im Wesentlichen zylindrische Form mit einem entlang der Durchdringungsrichtung D konstantem kreisförmigen Querschnitt auf. In dem Abstreifteil 16 ist eine Innenausnehmung 24 vorzugsweise als ein Durchgangsloch 24 vorgesehen. Das Abstreifteil 16 kann aber auch elastisch und ohne permanente Innenausnehmung 24 ausgebildet sein, wobei die Innenausnehmung 24 dann durch ein von einem Eindringen des Dorns 14 in das Abstreifteil 16 verursachtes elastisches Verformen vorübergehend gebildet wird. Im Falle einer permanenten Innenausnehmung 24 ist das Abstreifteil 16 vorzugsweise als Hülse oder Hohlzylinder ausgebildet. Das Verhältnis der Querschnittsmaße von Innenausnehmung 24 und Dorn 14 ist vorzugsweise so gewählt, dass in der Endstellung ein zwischen der Innenausnehmung 24 und derm Dorn 14 gebildeter Radialspalt 26 bereitgestellt ist, der so bemessen ist, dass der Dorn in die Innenausnehmung mit möglichst geringem Spiel einführbar ist. Das Abstreifteil 16 weist an seinem dornnäheren Längsende 16a einen Flächenabschnitt 34 auf, welcher bei oder nach der Bildung eines Lochs 4 in dem Werkstück 10 als Pressfläche 34 dienen kann, wie unten näher beschrieben werden wird.

Gemäß der ersten Ausführungsform der erfindungsgemäßen Lochverstärkungsvorrrichtung kann ein Sensor (nicht gezeigt) zur Erfassung eines Abstands des Abstreifteils 16 von seiner in Figur 1 dargestellten Ausgangsstellung vorgesehen sein. Das Abstreifteil 16 kann in Abhängigkeit von seinem Abstand von seiner Ausgangsstellung in der Ausnehmung 32a relativ zu dem Werkstück 10 und dem Dorn 14 derart bewegt werden, dass ein weiteres Wegbewegen des Abstreifteils 16 von der Ausgangsstellung über den Maximalabstand hinaus nicht möglich ist.

Wie in den Figuren 1 und 2 dargestellt ist, liegt in der Ausgangsstellung von Dorn 14 und Abstreifteil 16 der Endabschnitt 14a des Dorns 14 im Wesentlichen in einer durch die Werkstückanlagefläche 12 definierten Fläche oder ist dieser zumindest benachbart, so dass der Dorn 14 in der Ausgangsstellung vorzugsweise vollständig in der ersten Pressformhälfte 30 aufgenommen ist und nicht in den durch den Pressspalt 35 überbrückten Raum zwischen den Pressformhälften 30, 32 hineinragt. Es ist jedoch auch denkbar, dass der Dorn 14 bereits in der Ausgangsstellung in diesen Raum hineinragen kann. Vorzugsweise ist das Abstreifteil 16 zu jedem Zeitpunkt vollständig in der zweiten Pressformhälfte 32 aufgenommen, ragt also in Richtung zu der ersten Pressformhälfte 30 hin nie über die zweite Pressformhälfte 32 hinaus. Die Werkstückanlagefläche 12, welche im dargestellten Beispiel mit der Pressfläche P30 zusammenfällt, bildet mit der Durchdringungsrichtung D einen von Null verschiedenen Winkel w, der vorzugsweise 90 Grad beträgt.

In den Zwischenstellungen (Figuren 3 bis 5) und der Endstellung (Figur 6) durchsetzt der Dorn 14 mit seinem Endabschnitt 14a, vorzugsweise seiner Spitze 14a, mit dem sich verjüngenden Längsabschnitt 14b und vorzugsweise mit dem abstreifteilferneren Längsababschnitt 14c (Körperabschnitt) einen zu durchlochenden Abschnitt 6 des Werkstücks 10 unter Verdrängung von Fasern 8 des Werkstücks 10. Das Abstreifteil 16 umgibt in dieser Stellung unter Belassung des Radialspalts 26 wenigstens einen, vorzugsweise jedoch alle dieser Längsabschnitte 14a, 14b, 14c zumindest teilweise, wie in Figur 6 dargestellt ist.

Der Dorn 14 und das Abstreifteil 16 sind in der Ausgangsstellung vorzugsweise vollständig auf verschiedenen Seiten der Werkstückanlagefläche 12 angeordnet. Der Dorn 14 ist dann auf der dornseitigen Seite 18 gelegen und das Abstreifteil 16 ist dann auf der abstreifteilseitigen Seite 20 gelegen. In den Zwischenstellungen und in der Endstellung befindet sich der Dorn 14, vorzugsweise nur abschnittsweise, auf der abstreifseitigen Seite 20 der Werkstückanlagefläche 12, so dass ein abstreifteilferneres Längsende 14d des Dorns 14 stets auf der dornseitigen Seite 18 in der Ausnehmung 30a der ersten Pressformhälfte 30 verbleibt. In der Endstellung schließt die Pressfläche 34 des Abstreifteils 16 bündig mit einem der ersten Pressformhälfte 30 zugewandten Oberflächenabschnitt 33a eines der Pressfläche 34 benachbarten Bereichs 33 der zweiten Pressformhälfte 32 ab, wie in Figur 6 dargestellt ist. Vorzugsweise sind die Längsachsen des Dorns 14 und des . Abstreifteils 16 in Durchdringungsrichtung D stets entlang einer gemeinsamen Achse A (siehe Figur 3) angeordnet, entlang derer der Dorn 14 und das Abstreifteil 16 relativ zueinander beweglich sind.

In der hier nur beispielhaft betrachteten Ausführungsform umfasst das Werkstück 10 ein von einem thermoplastischen Kunststoff möglicherweise inhomogen durchsetztes vernadeltes Glasfasergewirr 36. Das Werkstück 10 kann in Durchdringungsrichtung D mit mehreren Lagen vorzugsweise unterschiedlichen Fasergewirrs 36 ausgebildet sein.

In dem Werkstück wird mittels des erfindungsgemäßen Verfahrens oder/und mit Hilfe der erfindungsgemäßen Lochrandverstärkungsvorrichtung 2 ein Loch 4 ausgebildet, welches von einem den Lochrand 4a (siehe Figur 6) des Loches 4 umfassenden Randbereich 10a von vorbestimmter Gestalt und vorbestimmtem Verfestigungsgrad umgeben ist, wobei Gestalt und Verfestigungsgrad durch das erfindungsgemäße Verfahren, insbesondere durch das eingesetzte Abstreifteil, bestimmt werden. Die Abmessung des Randbereichs 10a in der Haupterstreckungsebene des Werkstücks 10 entspricht im Wesentlichen der Abmessung der den Randbereich 10a erzeugenden Pressfläche 34 des Abstreifteils 16. Um das Loch 4 herum ist ferner ein außerhalb des Randbereichs 10a gelegener Materialbereich 10b (siehe gestrichelte Linie in Figur 2) gebildet, der in dem erfindungsgemäßen Werkstück einen geringeren mittleren Verdichtungsgrad aufweist als der Randbereich 10a. Loch 4, Randbereich 10a und Materialbereich 10b bilden einen Lochbereich 6. Der Randbereich 10a ist einerseits unmittelbar und nicht-überlappend durch das Loch 4 und andererseits unmittelbar und nicht-überlappend durch den Materialbereich 10b begrenzt.

Im Folgenden wird das Lochrandverstärkungsverfahren anhand einer Ausführungsform eispielhaft beschrieben werden. Durch Erhitzen des Werkstücks 10, beispielsweise in einem Umluftofen, auf eine Temperatur oberhalb der Schmelztemperatur des Thermoplasts und unterhalb der Schmelztemperatur der verstärkenden Glasfasern wird das Werkstück 10 in einen teilweise aufgeschmolzenen Zustand überführt, in welchem es in den Pressspalt 35 zwischen den beiden Pressformhälften 30, 32 an die Werkstückanlagefläche 12 angelegt wird. Alternativ kann der teilweise aufgeschmolzene Zustand des Werkstücks 10 auch erst in der Lochrandverstärkungsvorrichtung 2 durch darin vorgesehene geeignete Heizmittel hergestellt werden. Das Werkstück 10 wird vorzugsweise so auf die Werkstückanlagefläche 12 gelegt, dass der zu durchlochende Abschnitt 6 von der gemeinsamen Achse A von Dorn 14 und Abstreifteil 16 vorzugsweise zentral durchsetzt wird.

Figur 1 zeigt die geöffnete Pressform mit dem auf die Werkstückanlagefläche 12 zu legenden wenigstens im zu durchlochenden Abschnitt 6 Glasfasern 8 umfassenden Werkstück 10, welches aufgeschmolzene thermoplastische Bestandteile umfasst. In Figur 2 ist das Werkstück nach dem Zusammenführen der Pressformhälften 30, 32 vor einer pressenden Umformung des gesamten Werkstücks dargestellt. Dabei befinden sich gemäß der hier beschriebenen Ausführungsform der Dorn 14 und das Abstreifteil 16 noch in ihrer Ausgangsstellung innerhalb der jeweiligen Pressformhälften 30, 32. In dem zu durchlochenden Abschnitt 6 ist das Werkstück 10 zu diesem Zeitpunkt noch nicht druckbeaufschlagt, da der dem zu durchlochenden Abschnitt 6 gegenüberliegende Bereich der zweiten Pressformhälfte 32 einen Endabschnitt der Ausnehmung 32a gebildet.

In einem in Figur 3 dargestellten Verfahrensschritt wird der Dorn 14 sodann entlang der gemeinsamen Achse A in Durchdringungsrichtung D auf das Abstreifteil 16 zu durch den zu durchlochenden Abschnitt 6 des Werkstücks 2 geführt. Dabei trifft der Dorn 14 mit seinem hier als Spitze 14a ausgebildeten abstreifteilnäheren Endabschnitt 14a in dem zu durchlochenden Abschnitt 6 auf Fasern 8, beispielsweise in Form eines Fasergewirrs 36, wobei der Endabschnitt 14a die Fasern 8 nach bezogen auf die mit der Achse A zusammenfallende Längsmittelachse des Dorns 14 radial außen verdrängt, so dass die Fasern 8 nicht durchtrennt werden.

Gemäß einer anderen Ausführungsform der Erfindung kann der Dorn 14 jedoch an seinem Endabschnitt 14a Trennmittel (nicht gezeigt), insbesondere Schneidemittel, zum Durchtrennen von Fasern 8 in dem zu durchlochenden Abschnitt aufweisen, wenn der verwendete Werkstoff dies erfordert.

Ein Teil der verdrängten Fasern 8 wird durch den in Durchdringungsrichtung D vorrückenden Dorn 14 mitgerissen, so dass Fasern 8 sich an einem oder mehreren von dem Endabschnitt 14a, dem sich verjüngenden Längsabschnitt 14b und dem abstreifteilferneren Längsabschnitt 14c (Körperabschnitt) des Dorns 14 ablagern können. Der Dorn 14 wird jedoch vorzugsweise zur Einnahme der in der Figur 3 gezeigten Zwischenstellung soweit verlagert, dass die Fasern 8 nur noch an dem abstreifteilferneren Längsabschnitt 14c (Körperabschnitt) konstanten Querschnitts anliegen.

Erst dann beginnt das Abstreifen der Fasern 8 vom Dorn 14. Dazu wird das Abstreifteil 16, wie in Figur 4 gezeigt ist, zu dem Dorn 14 hin verlagert, bis der Endabschnitt 14a, der sich verjüngende Längsabschnitt 14b und, zumindest teilweise, der abstreifteilfernere Längsabschnitt 14c jeweils unter Belassung wenigstens des Radialspalts 26 in das Abstreifteil 16 eingeführt werden. Dabei streift das Abstreifteil 16 insbesondere mit seiner dornseitigen, die Pressfläche 34 umfassenden Fläche die an dem abstreifteilferneren Längsabschnitt 14c anliegenden Fasern 8 entgegen der Durchdringungsrichtung D zu dem zu durchlochenden Bereich 6 des Werkstücks 10 hin ab und schiebt diese Fasern zu Bereich 6 hin vor sich her, wodurch sich ein Faseraufwurf 37 bildet. Wie in der Figur 5 gezeigt ist, wird das gemäß der ersten Ausführungsform weggesteuerte Abstreifteil 16 im Wesentlichen so weit entgegen der Durchdringungsrichtung D auf den zu durchlochenden Abs schnitt 6 des Werkstücks 10 zu bewegt, bis der Faseraufwurf 37 in der Endstellung von Dorn 14 und Abstreifteil 16 in den Randbereich 10a des Lochs in gewünschter Dicke bzw. Verdichtung derart eingebracht ist, dass das thermoplastisch gebundene Fasermaterial des fertigen Werkstücks 10 im Randbereich 10a einen höheren Verdichtungsgrad aufweist als in den radial außerhalb des vorbestimmten Randbereichs 10a gelegenen Bereichen des Lochbereichs 6.

Dabei wird im dargestellten Beispiel der Randbereich 10a gegenüber dem Materialbereich 10b des Werkstücks 10 mit höherer Materialdichte und in Durchdringungsrichtung D im Wesentlichen gleicher Dicke ausgebildet. In einem weiteren, in Figur 6 dargestellten Verdichtungsschritt wird der in den Randbereich 10a eingebrachte Faseraufwurf 37 von der Pressfläche 34 des Abstreifteils 16 druckbeaufschlagt, so dass das Material des Faseraufwurfs 37 mit dem übrigen Material des Randbereichs 10a verpresst und verdichtet wird, wodurch der Lochrand 4a des gebildeten Lochs 4 ausreißfest verstärkt wird.

Dieser Verdichtungsschritt kann im Übrigen auch ohne eine gleichzeitig oder anschließend ausgeführte pressende Umformung anderer Werkstückabschnitte durch die Pressformhälften 30, 32 stattfinden.

Die Bewegungswege, um die der Dorn 14 und das Abstreifteil 16 verlagert werden, sowie die von den Pressformhälften 30, 32 und der Pressfläche 34, ausgeübten Pressdrücke sind an der Lochrandverstärkungsvorrichtung 2 vorzugsweise in Abhängigkeit von der Zusammensetzung und gewünschten Dicke des Werkstoffs und der gewünschten Verdichtung oder Ausreißfestigkeit des Randbereichs 10a des Lochs einstellbar. Ferner können der Dorn 14 und das Abstreifteil 16 beispielweise hydraulisch oder pneumatisch verlagerbar sein. Entsprechende dem Dorn 14 und dem Abstreifteil 16 zugeordnete Antriebe sind in den Figuren nicht dargestellt. Weiterhin weisen der Dorn 14 und das Abstreifteil 16, wenn das teils aufgeschmolzene Werkstück 10 in die Pressform gelegt wird, vorzugsweise Umgebungstemperatur auf, werden also für den Lochrandverstärkungsvorgang vorzugsweise nicht durch eine eigens dafür vorgesehene Heizvorrichtung erhitzt, so dass auch bei iterativer Durchführung des Lochrandverstärkungsverfahrens der Dorn 14 und das Abstreifteil 16 eine Temperatur unterhalb der Schmelztemperatur des im Werkstoff enthaltenen Thermoplasts aufweisen. In Weiterbildung der Erfindung ist jedoch auch eine Erwärmung des Dorns 14 oder/und des Abstreifteils 16 durch wenigstens eine eigens dafür vorgesehene Heizvorrichtung denkbar, so dass bei geeigneter Einstellung insbesondere der Temperatur des Dorns 14 durch das Durchdringen des Werkstücks 10 durch den Dorn 14 ein Aufschmelzen des Thermoplasts bewirkt oder unterstützt werden kann.

Vorzugsweise kann in dem erfindungsgemäßen Verfahren ferner das Abstreifteil 16 hinsichtlich der Größe seiner Pressfläche 34 in Abhängigkeit vom Faserverbundwerkstoff des Lochbereichs 6, der Größe des zu bildenden Lochs 4 und der gewünschten Verstärkung des Randbereichs 10a des zu bildenden Lochs 4 ausgewählt werden.

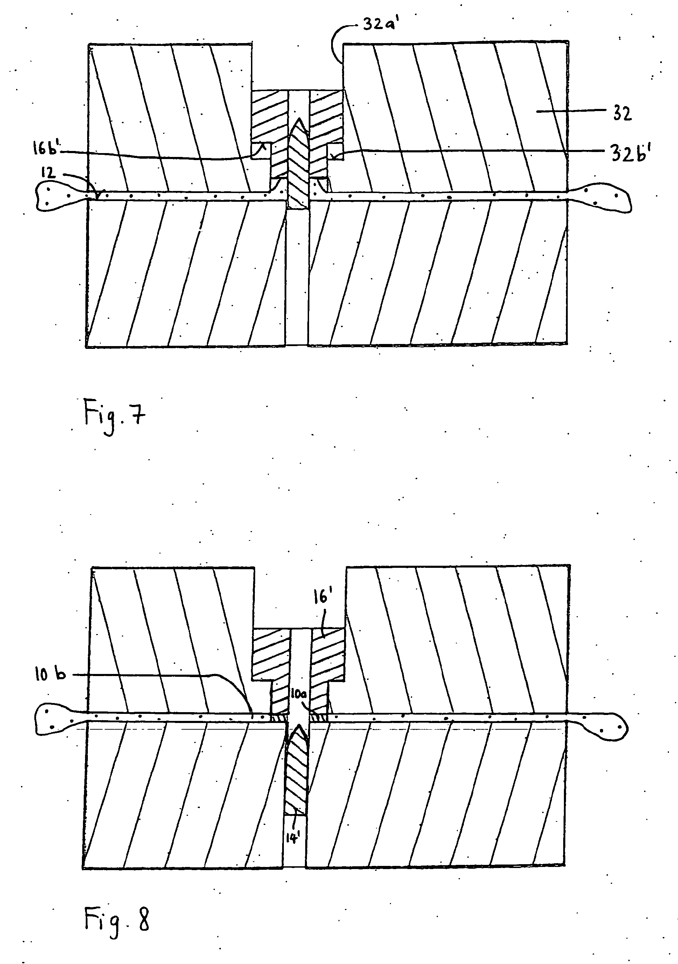

Figur 7 zeigt eine zweite Ausführungsform der erfindungsgemäßen Lochrandverstärkungsvorrichtung in einem Querschnitt in einer Zwischenstellung von Dorn 14 und Abstreifteil 16' in einer zweiten Ausführungsform. Die zweite Ausführungsform der erfindungsgemäßen Lochrandverstärkungsvorrichtung unterscheidet sich von der ersten Ausführungsform durch das Abstreifteil 16' und die Ausgestaltung der das Abstreifteil 16' aufnehmenden Ausnehmung 32a' der zweiten Pressformhälfte 32. Die zweite Ausführungsform stimmt ansonsten mit der ersten Ausführungsform überein und wird im folgenden nur in Hinblick auf ihre Abweichungen von der ersten Ausführungsform beschrieben werden.

Das Abstreifteil 16' der zweiten Ausführungsform ist nicht weggesteuert. Sein maximaler Abstand von seiner in Fig. 1 gezeigten Ausgangsstellung wird vielmehr durch einen mit einer vom Oberflächenabschnitt 33au abgewandten Anlagefläche 32b' bereitgestellten Anschlagvorsprung 32c' bestimmt, welcher an der zweiten Pressformhälfte 32' der Ausnehmung 32a' benachbart ausgebildet ist. Das Abstreifteil 16' ist mit einer der Werkstückanlagefläche 12 zugewandten Gegenanlagefläche 16b' bereitgestellt. Die Gestalt der Anlagefläche 32b' stimmt im Wesentlichen mit jener der Gegenanlagefläche 16b' überein. Vorzugsweise sind sowohl die Anlagefläche 32b' als auch die Gegenanlagefläche 16b' ringförmig ausgebildet. Beide Flächen können jedoch auch andere Gestalten aufweisen. Das Abstreifteil 16b' wird in dem Verdichtungsschritt gemäß der zweiten Ausführungsform des Lochrandverdichtungsverfahrens so weit auf den Randbereich 10a zu bewegt, bis die Gegenanlagefläche 16b' des Abstreifteils 16' in Anlage an die Anlagefläche 32b' der zweiten Pressformhälfte gelangt.

Figur 8 zeigt die zweite Ausführungsform der erfindungsgemäßen Lochrandverstärkungsvorrichtung einer weiteren Endstellung von Dorn und Abstreifteil nach einem Verdichten des Lochrandbereichs 10a.

Es hat sich gezeigt, dass Randbereich 10a und Materialbereich 10b eines erfindungsgemäßen Werkstücks im Wesentlichen dieselben Faserlängenverteilung aufweisen, wenn bei der Herstellung des Werkstücks keine Trennmittel zum Durchtrennen von Fasern eingesetzt werden.

In Versuchen mit einem bestimmten SeeberLite®-Werkstoff konnte ein Werkstück 10 unter Verwendung eines mit einem Außendurchmesser von 18,2 mm bereitgestellten Abstreifteils mit einem Loch 4 mit einem Lochdurchmesser von 8,0 mm und verdichtetem Lochrand hergestellt werden, wobei der Verdichtungsgrad des Materials im Bereich des Lochrands von 78% auf 95% und die Materialdichte von 0,9 g/cm³auf 1,12 g/cm³ erhöht werden konnte. Die Ausreißfestigkeit wurde dabei um 218% erhöht.

## Patentansprüche

1. Verfahren zur Verstärkung eines vorbestimmten Randbereichs (10a) eines Lochs (4) in einem Lochbereich (6) eines Werkstücks (10), wobei der Randbereich einen Rand (4a) des Loches (4) umfasst, wobei der Lochbereich (6) thermoplastisch gebundene Fasern (8), vorzugsweise ein thermoplastisch gebundenes Fasergewirr (36) umfasst, wobei das Fasermaterial des Lochbereichs (6) radial außerhalb des vorbestimmten Randbereichs (10a) im fertigen Zustand einen Verdichtungsgrad von weniger als 90 %, vorzugsweise von weniger als 80 % aufweist, wobei das Verfahren die folgenden Schritte umfasst:
- Bereitstellen des Werkstücks (10) mit einem erweichten thermoplastischen Binder wenigstens in dem Lochbereich (6),
- Durchdringen des Lochbereichs (6) des Werkstücks (10) in einer Durchdringungsrichtung (D) unter Verdrängung von Fasern (8) mit einem Dorn (14), der einen Körperabschnitt (14c) mit in Durchdringungsrichtung im Wesentlichen konstanter Querschnittsfläche und einen sich ausgehend von diesem in Durchdringungsrichtung (D) verjüngenden Längsendabschnitt (14b, 14c) aufweist,
- nach dem Durchdringen des Lochbereichs (6) mit dem Dorn (14): Abstreifen von Fasern (8) vom Dorn (14) entgegen der Durchdringungsrichtung (D) durch ein relativ zum Dorn (14) bewegliches Abstreifteil (16),
- Verdichten des vorbestimmten den Dorn (14) umgebenden Randbereichs (10a) mit einer Pressfläche (34) des Abstreifteils (16) relativ zu radial außerhalb des Randbereichs (10a) gelegenen Werkstückbereichen (10b) des Lochbereichs (6) derart, dass das thermoplastisch gebundene Fasermaterial des fertigen Werkstücks (10) im vorbestimmten Randbereich (10a) einen höheren Verdichtungsgrad aufweist als in den radial außerhalb des vorbestimmten Randbereichs (10a) gelegenen Bereichen (10b) des Lochbereichs (6), und derart, dass der Randbereich (10a) des Lochs (4) beim fertigen Werkstück (10) in einer der Durchdringungsrichtung (D) entsprechenden Durchgangsrichtung des Lochs (4) im Wesentlichen die gleiche Dicke aufweist, wie die radial außerhalb des Randbereichs (10a) gelegenen Bereiche (10b) des Lochbereichs (6).

2. Verfahren nach Anspruch 1,
**dadurch gekennzeichnet, dass** der Schritt des Abstreifens von Fasern vom Dorn (14) frühestens beginnt, wenn der Dorn (14) den Lochbereich (6) soweit durchdrungen hat, dass Fasern (8) des Werkstücks (10) im Wesentlichen nur am Körperabschnitt (14c) des Dorns (14) anliegen.

3. Verfahren nach Anspruch 2,
**dadurch gekennzeichnet, dass** der Schritt des Abstreifens von Fasern (8) vom Dorn (14) durch eine Bewegung des Abstreifteils (16) relativ zum Werkstück (10) entgegen der Durchdringungsrichtung (D) erfolgt, wobei die Abstreifbewegung des Abstreifteils (16) vorzugsweise erst beginnt, nachdem die Relativbewegung zwischen Dorn (14) und Werkstück (10) zur Durchdringung des Lochbereichs (6) beendet ist.

4. Verfahren nach einem der vorhergehenden Ansprüche,
**gekennzeichnet durch** einen weiteren Schritt eines Auswählens des Abstreifteils (16) hinsichtlich der Größe von dessen Pressfläche (34) in Abhängigkeit vom Faserverbundwerkstoff des Lochbereichs (6), der Größe des zu bildenden Lochs (4) und der gewünschten Verstärkung des Randbereichs (10a) des zu bildenden Lochs (4).

5. Verfahren nach einem der vorhergehenden Ansprüche,
**dadurch gekennzeichnet, dass** die beim Verdichten des Randbereichs (10a) auf das Abstreifteil (16) ausgeübte Kraft größer ist als die beim Durchdringen des Lochbereichs (6) auf den Dorn (14) ausgeübte Kraft.

6. Verfahren nach einem der vorhergehenden Ansprüche,
**dadurch gekennzeichnet, dass** das Verfahren zur Lochrandverstärkung während einer pressenden Umformung des gesamten Werkstücks (10) durchgeführt wird, vorzugsweise zu Beginn der pressenden Umformung.

7. Verfahren nach einem der vorhergehenden Ansprüche,
**dadurch gekennzeichnet, dass** der Schritt des Durchdringens des Lochbereichs (6) mit dem Dorn (14) ein Durchtrennen von Fasern (8) des Lochbereichs (6) umfasst.

8. Werkstück (10), das wenigstens einen ein Fasergewirr (36) umfassenden Lochbereich (6) aufweist, in dem durch Verdrängung von Fasern (8) des Fasergewirrs (36) ein Loch (4) mit einem Verfahren nach einem der vorhergehenden Ansprüche ausgebildet ist, wobei der Lochbereich (6) von radial innen nach radial außen das Loch (4), einen vorbestimmten, das Loch (4) umgebenden und einen Lochrand (4a) umfassenden Randbereich (10a) und einen außerhalb des Randbereichs (10a) gelegenen Materialbereich (10b) mit einem Verdichtungsgrad von weniger als 90 %, vorzugsweise von weniger als 80 %, umfasst, wobei der Randbereich (10a) einen höheren mittleren Verdichtungsgrad aufweist als der Materialbereich (10b),
**dadurch gekennzeichnet, dass** der Randbereich (10a) in einer Durchgangsrichtung des Lochs (4) im Wesentlichen die gleiche Dicke aufweist, wie der außerhalb des Randbereichs (10a) gelegene Materialbereich (10b)

9. Werkstück nach Anspruch 8,
**dadurch gekennzeichnet, dass** der Randbereich (10a) des Lochbereichs (6) im Wesentlichen dieselbe Faserlängenverteilung aufweist wie der Materialbereich (10b).

10. Werkstück nach einem der Ansprüche 8 bis 9,
**dadurch gekennzeichnet, dass** das Faserverbundmaterial des Werkstücks (10) mehrere unterschiedliche Materiallagen aufweist, von denen wenigstens eine ein thermoplastisch gebundenes Fasergewirr (36) umfasst.

11. Werkstück nach Anspruch 10,
**dadurch gekennzeichnet, dass** das Faserverbundmaterial des Werkstücks (10) wenigstens eine Lage mit einem thermoplastisch gebundenen Fasergewirr (36) und zusätzlich eine Decklage aus einem Vlies umfasst.

12. Werkstück nach einem der Ansprüche 8 bis 11,
**dadurch gekennzeichnet, dass** die radiale Ausdehnung des Randbereichs (10a) ausgehend von einer Mitte des Lochs (4) in einer vorbestimmten radialen Richtung nicht weniger als das 1,5-fache, vorzugsweise nicht weniger als das 2-fache, und nicht mehr als das 15-fache, vorzugsweise nicht mehr als das 13,5-fache des Lochradius in dieser Richtung beträgt.

13. Lochrandverstärkungsvorrichtung (2) zur Verstärkung eines vorbestimmten Randbereichs (10a) eines Lochs (4) in einem Lochbereich (6) eines Werkstücks (10), welcher thermoplastisch gebundene Fasern (8), vorzugsweise ein thermoplastisch gebundenes Fasergewirr (36) umfasst, wobei das Fasermaterial des Lochbereichs (6) radial außerhalb des vorbestimmten Randbereichs (10a) im fertigen Zustand einen Verdichtungsgrad von weniger als 90 %, vorzugsweise von weniger als 80 % aufweist, wobei der Randbereich (10a) einen Lochrand (4a) des Lochs (4) umfasst, wobei die Lochrandverstärkungsvorrichtung (2) eine Werkstückanlagefläche (12) zur Anlage eines zu durchlochenden Abschnitts (6) des Werkstücks (10) daran aufweist und weiter einen Dorn (14) umfasst, der relativ zu der Werkstückanlagefläche (12) beweglich ist und dazu ausgebildet ist, durch eine Bewegung relativ zu der Werkstückanlagefläche (12) den zu durchlochenden Abschnitt (6) unter Verdrängung von Fasern (8) des Werkstücks (10) in einer mit der Werkstückanlagefläche (12) einen Winkel (w), vorzugsweise einen rechten Winkel (w), einschließenden Durchdringungsrichtung (D) zu durchdringen, wobei die Lochrandverstärkungsvorrichtung (2) ferner ein Abstreifteil (16) umfasst, wobei Dorn (14) und Abstreifteil (16) relativ zueinander zwischen einer Ausgangsstellung und einer Endstellung beweglich sind, wobei Dorn (14) und Abstreifteil (16) in der Ausgangsstellung auf unterschiedlichen Seiten (18, 20) der Werkstückanlagefläche (12) gelegen und in Durchdringungsrichtung (D) mit Abstand (s) voneinander angeordnet sind, und wobei das Abstreifteil (16) in der Endstellung wenigstens einen Längsabschnitt (14a, 14b, 14c) des Dorns (14) umgibt, welcher auf derselben Seite (20) der Werkstückanlagefläche (12) gelegen ist wie das Abstreifteil (16), wobei das Abstreifteil (16) relativ zu der Werkstückanlagefläche (12) beweglich ist, vorzugsweise entgegen der Durchdringungsrichtung (D) beweglich ist, und dazu ausgebildet ist, bei einer Relativbewegung von Dorn (14) und Abstreifteil (16) Fasern (8) vom Dorn (14) entgegen der Durchdringungsrichtung (D) abzustreifen
**dadurch gekennzeichnet, dass** das Abstreifteil (16) weiter dazu ausgebildet ist, das zur Bildung des Lochs (4) verdrängte Fasermaterial im Randbereich (10a) so zu verdichten, dass bei dem mit der Lochrandverstärkungsvorrichtung bearbeiteten Werkstück (10) der Randbereich (10a) des Lochs (4) einen höheren mittleren Verdichtungsgrad aufweist als radial außerhalb des Randbereichs (10a) liegende Bereiche (10b) des Lochbereichs (6) und dabei der Randbereich (10a) in der Durchdringungsrichtung (D) im Wesentlichen die gleiche Dicke aufweist wie die radial außerhalb des Randbereichs (10a) liegenden Bereiche (10b) des Lochbereichs (6).

14. Lochrandverstärkungsvorrichtung (2) nach Anspruch 13, **dadurch gekennzeichnet, dass** das Abstreifteil (16) eine zur Aufnahme des Längsabschnitts (14a, 14b, 14c) des Dorns (14) in der Endstellung ausgebildete Innenausnehmung (24) aufweist.

15. Lochrandverstärkungsvorrichtung (2) nach einem der Ansprüche 13 oder 14,
**gekennzeichnet durch** eine Bearbeitungsform (28) mit zwei Bearbeitungsformhälften (30, 32), etwa eine Pressform (28) mit zwei einen Pressspalt (35) zwischen sich definierenden Pressformhälften (30, 32), wobei der Dorn (14) in einer ersten Bearbeitungsformhälfte (30), vorzugsweise relativ zu dieser beweglich, und das Abstreifteil (16) in der zweiten Bearbeitungsformhälfte (32), vorzugsweise relativ zu dieser beweglich, angeordnet ist.

16. Lochrandverstärkungsvorrichtung (2) nach Anspruch 15, **dadurch gekennzeichnet, dass** die Bearbeitungsform (28) eine Pressform (28) ist und ein dornseitiger Flächenabschnitt (34) des Abstreifteils (16) als Pressfläche (34) zur Pressbearbeitung des Werkstücks (10) ausgebildet ist.

## Claims

1. Method for the reinforcement of a predefined edge region (1 ova) of a hole (4) in a hole area (6) in a work piece (10), the edge region comprising an edge (4a) of the hole (4), the hole area (6) comprising thermoplastic ally bound fibres (8), preferably a thermoplastic ally bound tangle of fibres, the fibre material of the hole area (6) having in its finished state a degree of compaction of less than 90%, preferably of less than 80% radially outside the predefined edge region (10a), the method comprising the following steps:
- providing the work piece (10) with a softened thermoplastic binder, at least in the hole area (6),
- penetrating the hole area (6) of the work piece (10) with a mandrel (14) in a direction of penetration (D), thereby displacing fibres (8), the mandrel (14) comprising a body portion (14c) with a cross-sectional area which is substantially constant in the direction of penetration and a longitudinal end portion (14b, 14c), tapering from the latter in the direction of penetration (D),
- after penetrating the hole area (6) with the mandrel (14): scraping fibres (8) from the mandrel (14) in the opposite direction to the direction of penetration (D) by means of a scraper part (16) which is movable in relation to the mandrel (14),
- compacting the predefined edge region (10a) surrounding the mandrel (14) with a pressing surface (34) of the scraper part (16) in relation to work piece portions (10b) of the hole area (6) radially outside the edge region (10a) so that the thermoplastic ally bound fibre material of the finished work piece (10) in the predefined edge region (10a) has a higher degree of compaction than in the regions (10b) radially outside the predefined edge region (10a) of the hole area (6), and so that the edge region (10a) of the hole (4) in the finished work piece (10) has substantially the same thickness in a passage direction of the hole (4) corresponding to the direction of penetration (D) as the regions (10b) of the hole area (6) which are located radially outside the edge region (10a).

2. Method according to claim 1,
**characterized in that** the step of scraping the fibres from the mandrel (14) starts at the earliest when the mandrel (14) has penetrated the hole area (6) to the extent that the fibres (8) of the work piece (10) substantially only contact the body portion (14c) of the mandrel (14).

3. Method according to claim 2,
**characterized in that** the step of scraping the fibres (8) from the mandrel (14) is carried out by a movement of the scraper part (16) in relation to the work piece (10) in the opposite direction to the direction of penetration (D), the scraping movement of the scraper part (16) starting preferably after the relative movement between the mandrel (14) and the work piece (10) for penetrating the hole area (6) has finished.

4. Method according to one of the preceding claims,
**characterized by** a further step of selecting the scraper part (16) in terms of the size of its pressing surface (34) depending on the fibre composite material of the hole area (6), the size of the hole (4) to be formed and the desired reinforcement of the edge region (10a) of the hole (4) to be formed.

5. Method according to one of the preceding claims,
**characterized by** the force applied to the scraper part (16) during compaction of the edge region (10a) being larger than the force applied to the mandrel (14) during penetration of the hole area (6).

6. Method according to one of the preceding claims,
**characterized by** the method for reinforcing the hole area being carried out during a pressing transformation of the whole work piece (10), preferably in the beginning of the pressing transformation.

7. Method according to one of the preceding claims,
**characterized by** the step of penetrating the hole area (6) with the mandrel (14) comprising the severing of fibres (8) of the hole area (6).

8. Work piece (10), having at least a hole area (6) comprising a tangle of fibres (36), where a hole (4) is formed with the method according to one of the preceding claims by displacing fibres (8) of the tangle of fibres (36), the hole area (6) comprising from radially inside to radially outside the hole (4), a predefined edge region (10a) surrounding the hole (4) and comprising an edge of the hole (4a) and a material region (10b) outside the edge region (10a) with a degree of compaction of less than 90%, preferably of less than 80%, the edge region (10a) having a higher mean degree of compaction than the material region (10b),
**characterized by** the edge region (10a) having in a passage direction of the hole (4) substantially the same thickness as the material region (10b) outside the edge region (10a).

9. Work piece according to claim 8,
**characterized by** the edge region (10a) of the hole area (6) having substantially the same distribution of fibre length than the material region (10b).

10. Work piece according to one of claims 8 to 9,
**characterized by** the fibre composite material of the work piece (10) comprising several different material layers, at least one of them comprising a thermoplastic bound tangle of fibres (36).

11. Work piece according to claim 10,
**characterized by** the fibre composite material of the work piece (10) comprising at least one layer of a thermoplastic bound tangle of fibres (36) and additionally a cover layer made of fleece.

12. Work piece according to one of claims 8 to 11,
**characterized by** the radial expansion of the edge region (10a) starting from the centre of the hole (4) in a predefined radial direction being not less than the 1.5-fold, preferably not less than the 2-fold, not more than the 15-fold, preferably not more than the 13.5-fold of the hole radius in this direction.

13. Device for the reinforcement of the edge of a hole (2) for the reinforcement of a predefined edge region (10a) of a hole (4) in a hole area (6) of a work piece (10), comprising thermoplastic bound fibres (8), preferably a thermoplastic bound tangle of fibres (36), the fibre material of the hole area (6) having in the finished condition radially outside the predefined edge region (10a) a degree of compaction of less than 90%, preferably of less than 80%, the edge region (10a) comprising an edge (4a) of the hole (4), the device for the reinforcement of the edge of a hole (2) comprising a work piece abutment surface (12) for the abutment of a section to be perforated (6) of the work piece (10) thereon, and further comprising a mandrel (14) which is movable in relation to the work piece abutment surface (12) and is adapted for penetrating the section to be perforated (6) by a movement in relation to the work piece abutment surface (12) in a direction of penetration (D) enclosing an angle with the work piece abutment surface (12), preferably a right angle (w), displacing the fibres (8) of the work piece (10), the device for the reinforcement of the edge of a hole (2) further comprising a scraper part (16), wherein the mandrel (14) and the scraper part (16) are movable in relation to each other between a starting position and a final position, the mandrel (14) and the scraper part (16) being arranged in the starting position on different sides (18, 20) of the work piece abutment surface (12) and having a distance (s) in the direction of penetration (D), and the scraper part (16) surrounding in the final position at least one longitudinal portion (14a, 14b, 14c) of the mandrel (14), which is located at the same side (20) of the work piece abutment surface (12) as the scraper part (16), the scraper part (16) being movable in relation to the work piece abutment surface (12), preferably in a direction opposite to the direction of penetration (D), and being adapted for scraping fibres (8) from the mandrel (14) in a direction opposite to the direction of penetration (D) in case of a relative movement of mandrel (14) and scraper part (16),
**characterized by** the scraper part (16) being furthermore adapted for compacting the fibre material in the edge region (10a) which has been displaced for forming the hole so that in the work piece (10) processed with the device for the reinforcement of the edge of a hole the edge region (10a) of the hole (4) has a higher mean degree of compaction than regions radially outside the edge region (10a) of the hole area (6) and so that the edge region (10a) has in the direction of penetration (D) substantially the same thickness as the regions (10b) of the hole area (6) located radially outside the edge region (10a).

14. Device for the reinforcement of the edge of a hole (2) according to claim 13,
**characterized by** the scraper part (16) comprising an inner recess (24) formed for receiving the longitudinal portion (14a, 14b, 14c) of the mandrel (14) in the final position.

15. Device for the reinforcement of the edge of a hole (2) according to one of claims 13 or 14,
**characterized by** a processing mould (28) with two processing mould halves (30, 32), for example a press mould (28) with two press mould halves (30, 32) defining a pressing gap (35) in between, the mandrel (14) being arranged in a first processing mould half (30), preferably movable in relation to the latter, and the scraper part (16) being arranged in the second processing mould half (32), preferably movable to the latter.

16. Device for the reinforcement of the edge of a hole (2) according to claim 15,
**characterized by** the processing mould (28) being a press mould (28) and by a mandrel-sided surface area (34) of the scraper part (16) being adapted as pressing surface (34) for machining the work piece (10).

## Revendications

1. Méthode pour le renforcement d'une région de bord (10a) prédéfinie d'un trou (4) dans une région de trou (6) d'une pièce d'ouvrage (10), la région de bord comprenant un bord (4a) du trou (4), la région de trou (6) comprenant des fibres reliées de manière thermoplastique (8), de préférence un enchevêtrement de fibres reliées de manière thermoplastique (36), le matériau de fibres de la région de trou (6) ayant dans un état fini radialement à l'extérieur de la région de bord (10a) prédéfinie un degré de compactage de moins de 90%, de préférence de moins de 80%, la méthode comprenant les étapes suivantes :
- prévoir une pièce d'ouvrage (10) avec une matière liante ramollie, au moins dans la région de trou (6),
- pénétrer la région de trou (6) de la pièce d'ouvrage (10) dans une direction de pénétration (D) déplaçant les fibres (8) avec un mandrin (14) qui comprend une partie de corps (14c) avec une surface de section transversale essentiellement constante dans la direction de pénétration et une partie d'extrémité longitudinale (14b, 14c) se rétrécissant à partir de celui-ci dans la direction de pénétration (D),
- après la pénétration de la région de trou (6) avec le mandrin (14) : racler les fibres (8) du mandrin (14) dans le sens opposé à la direction de pénétration (D) par un élément de raclage (16) mobile par rapport au mandrin (14),
- compacter la région de bord (10a) prédéfinie entourant le mandrin (14) avec une surface de pression (34) de l'élément de raclage (16) en relation à des régions de la pièce d'ouvrage (10b) de la région de trou (6) situées radialement en dehors de la région de bord (10a) de sorte que le matériau de fibres reliées de manière thermoplastique de la pièce d'ouvrage (10) finie montre dans la région de bord prédéfinie (10a) un plus grand degré de compactage que dans les régions (10b) radialement en dehors de la région de bord prédéfinie (10a) de la région de trou (6) et de sorte que la région de bord (10a) du trou (4) aie chez la pièce d'ouvrage (10) finie dans une direction de passage du trou (4) correspondant à la direction de pénétration (D) essentiellement la même épaisseur que les régions (10b) radialement en dehors de la région de bord prédéfinie (10a) de la région de trou (6).

2. Méthode selon la revendication 1,
**caractérisée en ce que** l'étape du raclage des fibres du mandrin (14) commence au plus tôt lorsque le mandrin (14) a pénétré la région de trou (6) à tel point que les fibres (8) de la pièce d'ouvrage (10) reposent de manière générale seulement contre la partie de corps (14c) du mandrin (14).

3. Méthode selon la revendication 2,
**caractérisée en ce que** l'étape du raclage des fibres (8) du mandrin (14) se fait par un mouvement de l'élément de raclage (16) en relation à la pièce d'ouvrage (10) dans le sens opposé à la direction de pénétration (D), le mouvement de raclage de l'élément de raclage (16) commençant de préférence après la fin du mouvement relatif entre le mandrin (14) et la pièce d'ouvrage (10) pour pénétrer la région de trou (6).

4. Méthode selon une des revendications précédentes,
**caractérisée par** une étape supplémentaire de la sélection de l'élément de raclage (16) concernant la taille de la surface de pression (34) en fonction du matériau composite à base de fibres de la région de trou (6), de la taille du trou (4) à former et du renforcement souhaité de la région de bord (10a) du trou (4) à former.

5. Méthode selon une des revendications précédentes,
**caractérisée par** la force appliquée à l'élément de raclage (16) lors du compactage de la région de bord (10a) étant plus grande que la force appliquée au mandrin (14) lors de la pénétration de la région de trou (6).

6. Méthode selon une des revendications précédentes,
**caractérisée par** la méthode du renforcement du bord de trou étant effectuée pendant la transformation par pressage de la pièce d'ouvrage (10) entière, de préférence au début de la transformation par pressage.

7. Méthode selon une des revendications précédentes,
**caractérisée par** l'étape de la pénétration de la région de trou (6) avec le mandrin (14) comprenant un coupage de fibres (8) de la région de trou (6).

8. Pièce d'ouvrage (10) prévoyant une région de trou (6) qui comprend au moins un enchevêtrement de fibres (36), où un trou (6) est formé par déplacement des fibres (8) de l'enchevêtrement de fibres (36) par une méthode selon une des revendications précédentes, la région de trou (6) comprenant radialement de l'intérieur à l'extérieur le trou (4), une région de bord prédéfinie (10a) entourant le trou (4) et comprenant un bord de trou (4a) et une région de matériau (10b) située hors de la région de bord (10a) avec un degré de compactage de moins de 90%, de préférence de moins de 80%, la région de bord (10a) ayant un degré de compactage moyen supérieur à celui de la région de matériau (10b),
**caractérisée par** la région de bord (10a) ayant dans une direction de passage du trou (4) essentiellement la même épaisseur que la région de matériau (10b) située en dehors de la région de bord (10a).

9. Pièce d'ouvrage selon la revendication 8,
**caractérisée par** la région de bord (10a) de la région de trou (6) ayant essentiellement la même distribution de longueur de fibre que la région de matériau (10b).

10. Pièce d'ouvrage selon une des revendication 8 à 9,
**caractérisée par** le matériau composite à base de fibres de la pièce d'ouvrage (10) comprenant plusieurs couches de matériau différentes, dont au moins une comprend un enchevêtrement de fibres reliées de manière thermoplastique (36).

11. Pièce d'ouvrage selon la revendication 10,
**caractérisée par** le matériau composite à base de fibres de la pièce d'ouvrage (10) comprenant au moins une couche d'un enchevêtrement de fibres reliées de manière thermoplastique (36) et en outre une couche de revêtement faite d'un non-tissé.

12. Pièce d'ouvrage selon une des revendication 8 à 11,
**caractérisée par** l'expansion radiale de la région de bord (10a) d'un centre du trou (4) dans une direction radiale prédéterminée étant non inférieure à 1.5 fois, de préférence non inférieure à 2 fois, et non supérieure à 15 fois, de préférence non supérieure à 13.5 fois le rayon du trou dans cette direction.

13. Dispositif de renforcement d'une région de bord d'un trou (2) pour renforcer une région de bord prédéfinie (10a) d'un trou (4) dans une région de trou (6) d'une pièce d'ouvrage (10) comprenant des fibres reliées de manière thermoplastique (8), de préférence un enchevêtrement de fibres reliées de manière thermoplastique (36), le matériau de fibres de la région de trou (6) radialement à l'extérieur de la région de bord prédéfinie (10a) ayant dans un état fini un degré de compactage de moins de 90%, de préférence de moins de 80%, la région de bord prédéfinie (10a) comprenant un bord de trou (4a) du trou (4), le dispositif de renforcement d'une région de bord (2) comprenant une surface d'appui de pièce d'ouvrage (12) pour l'appui d'une section à perforer (6) de la pièce d'ouvrage (10) et en outre un mandrin (14) qui est mobile par rapport à la surface d'appui de pièce d'ouvrage (12) et qui est adapté pour pénétrer la région à perforer (6) en déplaçant des fibres (8) de la pièce d'ouvrage (10) dans une direction de pénétration (D) renfermant un angle (w) avec la surface d'appui de pièce d'ouvrage (12), de préférence un angle droit (w), le dispositif de renforcement d'une région de bord (2) comprenant en outre un élément de raclage (16), le mandrin (14) et l'élément de raclage (16) étant mobile l'un par rapport à l'autre entre une position de départ et une position finale, le mandrin (14) et l'élément de raclage (16) étant dans la position de départ situés sur des côtés différents (18, 20) de la surface d'appui de pièce d'ouvrage (12) et étant arrangés dans la direction de pénétration (D) avec une distance (s), et l'élément de raclage (16) entourant dans la position finale au moins une section longitudinale (14a, 14b, 14c) du mandrin (14), qui est situé sur le même côté (20) de la surface d'appui de pièce d'ouvrage (12) que l'élément de raclage (16), l'élément de raclage (16) étant mobile par rapport à la surface d'appui de pièce d'ouvrage (12), de préférence mobile dans le sens opposé à la direction de pénétration (D), et étant formé pour racler des fibres (8) du mandrin (14) lors d'un mouvement relatif du mandrin (14) et de l'élément de raclage (16),
**caractérisée par** l'élément de raclage (16) étant en outre formé pour compacter le matériau de fibres déplacé pour la formation du trou (4) dans la région de bord (10a) de sorte que la région de bord (10a) du trou (4) de la pièce d'ouvrage (10) traitée par le dispositif de renforcement d'une région de bord aie un degré de compactage moyen supérieur à celui des régions (10b) de la région de trou (6) radialement extérieures, la région de bord (10a) ayant dans la direction de pénétration (D) essentiellement la même épaisseur que les régions (10b) de la région de trou (6) radialement extérieures à la région de bord (10a).

14. Dispositif de renforcement d'une région de bord (2) selon la revendication 13,
**caractérisée par** l'élément de raclage (16) comprenant un évidement intérieur (24) pour recevoir une section longitudinale (14a, 14b, 14c) du mandrin (14) dans la position finale.

15. Dispositif de renforcement d'une région de bord (2) selon une des revendications 13 ou 14,
**caractérisée par** un moule de traitement (28) avec deux moitiés de moule de traitement (30, 32), par exemple un moule de pressage (28) avec deux moitiés de moule de pressage (30, 32) formant entre elles une fente de pressage (35), le mandrin (14) étant dans une première moitié de moule de traitement (30) arrangé de préférence de façon mobile par rapport à cette dernière et l'élément de raclage (16) étant dans la deuxième moitié de moule de traitement (32) arrangé de préférence de façon mobile par rapport à cette dernière.

16. Dispositif de renforcement d'une région de bord (2) selon la revendication 15,
**caractérisée par** le moule de traitement (28) étant un moule de pressage (28) et par une section de surface (34) de l'élément de raclage (16) du côté du mandrin étant formée en tant que surface de pressage (34) pour le traitement par pressage de la pièce d'ouvrage (10).
